# EUROPÄISCHE PATENTSCHRIFT

(11) **EP 2 095 686 B1**
(45) Veröffentlichungstag und Bekanntmachung des Hinweises auf die Patenterteilung: **27.05.2015**
(21) Anmeldenummer: 07822506.7
(22) Anmeldetag: 12.11.2007
(51) Int. Cl.: H05B 6/12

(54) **HEIZVORRICHTUNGSSCHALTUNG**
HEATING DEVICE CIRCUIT
CIRCUIT DE DISPOSITIF CHAUFFANT

(30) Priorität: 21.11.2006 ES 200603045
(43) Veröffentlichungstag der Anmeldung: 02.09.2009
(73) Patentinhaber: BSH Hausgeräte GmbH, 81739 München (DE)
(72) Erfinder: GARCIA JIMENEZ, Jose-Ramon, 50009 Zaragoza (ES); GARDE ARANDA, Ignacio, 50012 Zaragoza (ES); HERNANDEZ BLASCO, Pablo Jesus, 50017 Zaragoza (ES); LLORENTE GIL, Sergio, 50009 Zaragoza (ES); MONTERDE AZNAR, Fernando, 50013 Zaragoza (ES); ACERO ACERO, Jesus, 50002 Zaragoza (ES); POLLAN SANTAMARÍA, Tomas, 50014 Zaragoza (ES)
(86) Internationale Anmeldenummer: PCT/EP2007/062227
(87) Internationale Veröffentlichungsnummer: WO 2008/061908

(56) Entgegenhaltungen:
- WO-A-2006/032292
- DE-A1- 19 500 449
- DE-A1- 19 654 299

## Beschreibung

Die Erfindung geht aus von einer Heizvorrichtungsschaltung, insbesondere einer Induktionskochvorrichtungsschaltung, nach dem Oberbegriff des Anspruchs 1.

Schaltungen für eine Heizvorrichtung, insbesondere für eine Induktionskochvorrichtung, sind bekannt. Diese umfassen Heizkörper, die im Betrieb ein Heizsignal mit einer Heizfrequenz an einen zu heizenden Gegenstand übertragen, wobei die Heizfrequenz mittels Schaltvorgängen von Wechselrichtern erzeugt wird. Die Wechselrichter werden mit einem Gleichstromsignal gespeist, welches sich aus einem gleichgerichteten Netzstromsignal ergibt.

Die Aufgabe der Erfindung besteht insbesondere darin, eine konstruktiv einfache und kostengünstige Heizvorrichtungsschaltung bereitzustellen.

Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

Die Erfindung geht aus von einer Heizvorrichtungsschaltung, insbesondere einer Induktionskochvorrichtungsschaltung, mit einem Satz von Heizfrequenzeinheiten zur Erzeugung einer Heizfrequenz und mit zumindest einer Frequenzbearbeitungseinheit zum Ändern zumindest einer Frequenz eines Signals, das den Heizfrequenzeinheiten vorgeschaltet ist.

Es wird vorgeschlagen, dass der Frequenzbearbeitungseinheit zumindest drei Heizfrequenzeinheiten zugeordnet sind. Es können dadurch Bauteile, Bauraum, Montageaufwand und Kosten vorteilhaft reduziert werden. Unter einer "Zuordnung" kann in diesem Zusammenhang insbesondere die Bereitstellung einer spannungsführenden Verbindung, insbesondere in der Form einer elektrischen Leitung, zwischen den Heizfrequenzeinheiten und der Frequenzbearbeitungseinheit verstanden werden. Durch diese Zuordnung können die Heizfrequenzeinheiten über ein elektrisches Signal, welches von der Frequenzbearbeitungseinheit bereitgestellt wird, verfügen. Insbesondere können die Heizfrequenzeinheiten das von der Frequenzbearbeitungseinheit bereitgestellte Signal über eine für die Heizfrequenzeinheiten gemeinsame Leitungsschiene beziehen, aus welcher zum Zuführen des Signals zu einer der Heizfrequenzeinheiten jeweils eine Zufuhrleitung abgezweigt ist, wodurch eine besonders einfache Ausgestaltung der Frequenzbearbeitungseinheit erreicht werden kann. Unter einer ersten Einheit, die einer zweiten Einheit "vorgeschaltet" ist, kann insbesondere eine Einheit verstanden werden, die in Reihe mit der zweiten Einheit geschaltet ist. Es kann darunter ferner insbesondere eine Einheit verstanden werden, welche zwischen einer Netzstromversorgung und der zweiten Einheit geschaltet ist. Unter einer "Frequenzbearbeitungseinheit" kann insbesondere eine Einheit verstanden werden, die dazu dient, ein Signal in dessen Frequenzspektrum zu bearbeiten. Beispielsweise kann durch die Frequenzbearbeitungseinheit die Grundfrequenz des Signals geändert werden. Ferner kann die Frequenzbearbeitungseinheit dazu ausgelegt sein, Oberschwingungen des Signals zu bearbeiten. Das Signal kann als Signal zum Speisen der Heizfrequenzeinheiten ausgebildet sein. Dabei ergibt sich das Signal vorzugsweise durch eine mittels der Frequenzbearbeitungseinheit durchgeführte Bearbeitung eines Netzstromversorgungssignals. Alternativ kann das Signal ein bei einem Betrieb der Heizfrequenzeinheiten erzeugtes Signal sein. Zweckmäßigerweise erzeugt eine Heizfrequenzeinheit ein mit der Heizfrequenz oszillierendes elektrisches Signal, mit welchem ein Heizkörper gespeist wird, der anhand dieses Signals Heizenergie an einen zu heizenden Gegenstand überträgt. Um weitere Bauteile einsparen zu können, sind der Frequenzbearbeitungseinheit vorteilhafterweise zumindest fünf, bevorzugt zumindest zehn und besonders vorteilhaft zumindest zwanzig Heizfrequenzeinheiten zugeordnet.

Die erfindungsgemäße Heizvorrichtungsschaltung eignet sich insbesondere für den Einsatz bei Induktionskochvorrichtungen, wie z.B. bei Induktionskochfeldern, bei denen aufgrund der Anzahl von Heizfrequenzeinheiten und der in einem Betrieb erreichten hohen Stromintensitäten herkömmlicherweise ein hoher Montageaufwand erforderlich ist. Durch eine für die Heizfrequenzeinheiten gemeinsame Frequenzbearbeitungseinheit kann eine hohe Homogenität im Betrieb der Induktionsheizkörper der Induktionskochvorrichtung erreicht werden.

In einer bevorzugten Ausführungsform der Erfindung wird vorgeschlagen, dass die Frequenzbearbeitungseinheit einen Gleichrichter aufinreist. Dadurch kann ein für die Heizfrequenzeinheiten gemeinsames gleichgerichtetes Signal bereitgestellt werden, wobei unerwünschte Differenzen in der Spannungs- und/oder Stromversorgung der Heizfrequenzeinheiten vermieden werden können. Bei dieser Ausführungsform der Frequenzbearbeitungseinheit sind die Heizfrequenzeinheiten vorzugsweise als Wechselrichter ausgebildet, die mit einem vom Gleichrichter ausgegebenen Gleichspannungssignal gespeist werden und die Heizfrequenz mittels Schaltvorgängen erzeugen.

Außerdem wird vorgeschlagen, dass die Frequenzbearbeitungseinheit eine Frequenzfilterungseinheit aufweist. Insbesondere dient die Frequenzfilterungseinheit dazu, ein im Betrieb der Heizfrequenzeinheiten erzeugtes Signal vor dessen Rückkopplung in eine Netzleitung zu bearbeiten. Es ist insbesondere von Vorteil, wenn ein von einer Heizfrequenzeinheit erzeugtes hochfrequentes Signal, welches z.B. die Heizfrequenz aufweist, von der Frequenzfilterungseinheit herausgefiltert wird, wodurch eine unerwünschte Rückkopplung in eine Netzleitung verhindert wird und dabei elektromagnetische Schutznormen, wie z.B. die EMV-Norm (elektromagnetische Verträglichkeit), eingehalten werden können.

Vorzugsweise bildet eine Heizfrequenzeinheit im Zusammenwirken mit jeweils einem Heizkörper ein Heizmodul zum Erzeugen eines Heizsignals mit der Heizfrequenz, wodurch eine einfache Zuordnung der Heizfrequenzeinheit und der Heizkörper erreicht werden kann. In diesem Zusammenhang wird vorgeschlagen, dass die Heizvorrichtungsschaltung eine Steuereinheit aufweist, die dazu vorgesehen ist, abhängig von einer Position eines zu heizenden Gegenstands relativ zu den Heizmodulen eine zum Heizen des Gegenstands ausgebildete Heizgruppe von Heizmodulen zu bilden. Dadurch kann eine hohe Flexibilität in der Anwendung einer Heizvorrichtung, in welcher die Heizvorrichtungsschaltung eingesetzt ist, erreicht werden. Dies eignet sich insbesondere für den Einsatz der Heizvorrichtungsschaltung bei einer Kochvorrichtung. Dabei sind die Heizmodule vorzugsweise unterhalb einer Kochplatte angeordnet. Bei einem Gruppenbetrieb zum Heizen des Gegenstands setzt sich eine Heizgruppe von Heizmodulen vorzugsweise aus Heizmodulen des Satzes zusammen, die vom sich auf der Kochplatte befindenden Gegenstand, insbesondere einem Kochgeschirr, zumindest teilweise gedeckt sind. Die Anordnung der Heizmodule ist vorzugsweise als Matrixanordnung ausgelegt. Dabei können Heizmodule unterschiedlicher Reihen und/oder unterschiedlicher Spalten der Matrixanordnung vom auf der Kochplatte aufgelegten Gegenstand zumindest teilweise gedeckt sein. Die Heizmodule sind vorzugsweise derart dimensioniert, dass ein Kochgeschirr üblicher Dimensionen, wie z.B. ein Topf mit einem Durchmesser von zumindest 8 cm, Heizmodule unterschiedlicher Reihen und unterschiedlicher Spalten zumindest teilweise deckt. Der Satz von Heizmodulen legt eine zu einem Heizen des Gegenstands geeignete, zusammenhängende Kochzone der Kochplattenoberfläche fest, welche zumindest einen überwiegenden Teil der Kochplattenoberfläche, vorteilhaft zumindest 60 %, bevorzugt mindestens 70 % und besonders vorteilhaft zumindest 80 % der Kochplattenoberfläche, deckt. Beim Verstellen des Gegenstands auf der Kochplatte kann flexibel ein Heizen von Gegenständen in beliebig gewählten Positionen dieser Gegenstände innerhalb dieser Kochzone durchgeführt werden. Die Steuereinheit ist hierbei vorzugsweise dazu vorgesehen, die Zusammensetzung der Heizgruppe an eine Änderung der Position des Gegenstands relativ zu den Heizmodulen zumindest teilautomatisch, vorteilhaft vollautomatisch, anzupassen. Beim Auflegen eines weiteren Gegenstands kann eine weitere Heizgruppe zum Durchführen eines Gruppenbetriebs gebildet werden. Eine für einen Gruppenbetrieb der Heizmodule vorgesehene Heizvorrichtungsschaltung ist vorzugsweise mit einer großen Anzahl von Heizmodulen, wie insbesondere mit zumindest sechs Heizmodulen, versehen. Um eine hohe Flexibilität in der Positionierung des Gegenstands für einen Heizbetrieb zu erreichen, ist die Heizvorrichtungsschaltung vorzugsweise mit einem Satz von zumindest zehn, vorteilhafterweise zumindest zwanzig, besonders bevorzugt zumindest vierzig Heizmodulen versehen.

Ferner wird vorgeschlagen, dass die Heizvorrichtungsschaltung zumindest zwei Steuereinheiten aufweist, die jeweils zur Steuerung einer Gruppe von Heizfrequenzeinheiten vorgesehen sind, wodurch eine flexible Steuerung der Heizfrequenzeinheiten erreicht werden kann. Dabei weist eine Gruppe vorzugsweise zumindest vier, vorteilhaft zumindest sechs und besonders vorteilhaft zumindest zwölf Heizfrequenzeinheiten auf.

In diesem Zusammenhang kann eine konstruktiv einfache Schaltung der Frequenzbearbeitungseinheit und der verschiedenen Gruppen erreicht werden, wenn der Frequenzbearbeitungseinheit zumindest zwei Gruppen von Heizfrequenzeinheiten zugeordnet sind.

Es wird außerdem vorgeschlagen, dass die Frequenzbearbeitungseinheit im Betrieb ein für die Steuereinheiten gemeinsames Referenzsignal bereitstellt. Dadurch kann vorteilhaft ein besonders stabiles, zentral vorgegebenes Referenzsignal für die Steuereinheiten erreicht werden. Dieses Referenzsignal entspricht vorzugsweise einer bestimmten Ausgangspolung und/oder einem Erdungsausgang der Frequenzbearbeitungseinheit. Dieses Referenzsignal kann ferner mittels einer mit der Frequenzbearbeitungseinheit verbundenen, für die Steuereinheiten gemeinsamen Leitungsschiene bereitgestellt werden, von welcher z.B. jeweils eine Zufuhrleitung zur Versorgung einer Steuereinheit abgezweigt ist. Sind die Steuereinheiten miteinander verbunden, insbesondere zur Herstellung einer Datenverbindung z.B. zum Austausch von Informationen, kann vorteilhaft auf eine Isolierung der Verbindung der Steuereinheiten verzichtet werden. Dies eignet sich insbesondere, wenn die Heizvorrichtung zu einem Gruppenbetrieb von Heizmodulen vorgesehen ist und die Bildung einer Heizgruppe mittels einer der Steuereinheiten oder eines Zusammenwirkens der Steuereinheiten durchgeführt wird.

Ferner wird vorgeschlagen, dass die Heizvorrichtungsschaltung eine Stromversorgungseinheit zur Versorgung der Steuereinheiten aufweist, die im Betrieb ein für die Steuereinheiten gemeinsames Stromversorgungssignal bereitstellt, wodurch eine besonders einfache Ausbildung der Stromversorgung der Steuereinheiten erreicht werden kann. Das Stromversorgungssignal kann mittels einer für die Steuereinheiten gemeinsamen Leitungsschiene bereitgestellt werden, aus welcher jeweils eine Zufuhrleitung zur Versorgung einer Steuereinheit abgezweigt ist.

In einer bevorzugten Weiterbildung der Erfindung wird vorgeschlagen, dass die Heizvorrichtungsschaltung einen Satz von Leiterplatten aufweist, auf welchen jeweils eine Gruppe von Heizfrequenzeinheiten angeordnet ist, wodurch eine einfache Schaltung der Gruppen und eine einfache Montage erreicht werden können. Vorzugsweise ist auf einer Leiterplatte eine zur Steuerung der auf der Leiterplatte angeordneten Gruppe vorgesehene Steuereinheit angeordnet, wodurch die Schaltung weiter vereinfacht werden kann.

In diesem Zusammenhang können Bauraum und Montageaufwand weiter reduziert werden, wenn der Frequenzbearbeitungseinheit zumindest zwei Leiterplatten zugeordnet sind.

In einer vorteilhaften Weiterbildung der Erfindung wird vorgeschlagen, dass die Frequenzbearbeitungseinheit eine Maximalleistung aufweist, die kleiner als die Leistung des Satzes von Heizfrequenzeinheiten ausgebildet ist. Es können dadurch gängige und kostengünstige Komponenten für die Frequenzbearbeitungseinheit eingesetzt werden. Die "Leistung des Satzes" entspricht vorzugsweise der Summe aller individuellen Leistungen, insbesondere der Maximalleistungen der Heizfrequenzeinheiten. Dies eignet sich insbesondere, wenn die Heizfrequenzeinheiten Teile von Heizmodulen sind, die zum Heizen eines Gegenstands mittels eines Gruppenbetriebs vorgesehen sind. Bei einem Gruppenbetrieb der Heizmodule ist der Satz von Heizmodulen in Gruppen von betriebenen und unbetriebenen Heizmodulen verteilt. Dadurch wird bei einem Heizbetrieb die Heizvorrichtungsschaltung typischerweise mit einer kleineren Leistung als die Summe der individuellen Leistungen aller Heizmodule des Satzes betrieben. Die Maximalleistung der Frequenzbearbeitungseinheit kann vorteilhaft kleiner als 90 %, besonders vorteilhaft kleiner als 70 %, und besonders bevorzugt kleiner als 50 % der Leistung des Satzes von Heizfrequenzeinheiten gewählt werden. Unter der "Maximalleistung" einer Einheit kann in diesem Zusammenhang insbesondere die maximal zulässige Annahme- oder Abgabeleistung verstanden werden. Deren Wert ist durch die Dimensionierung interner Komponenten der Einheit festgelegt. Die Maximalleistung kann der Obergrenze eines Leistungsbereichs entsprechen, der für einen störungsfreien Betrieb der Einheit geeignet ist. Insbesondere kann unter "Maximalleistung" der Begriff Nennleistung verstanden werden.

Zweckmäßigerweise ist die Heizvorrichtungsschaltung mit einer Schutzeinrichtung versehen, die dazu vorgesehen ist, eine von der Frequenzbearbeitungseinheit angenommene oder ausgegebene Leistung zu begrenzen. Dadurch können eine hohe Sicherheit und eine langlebige Frequenzbearbeitungseinheit erreicht werden. Dabei kann die Frequenzbearbeitungseinheit die Schutzeinrichtung als interne Komponente aufweisen oder die Schutzeinrichtung kann als Bauteil und/oder als Programm einer externen Steuereinheit zum Steuern eines Betriebs des Satzes von Heizfrequenzeinheiten ausgebildet sein. Die Schutzeinrichtung kann eine Sensoreinheit zur Erfassung der ausgegebenen Leistung, wie z.B. einen Stromwandler zum Erfassen eines von der Frequenzbearbeitungseinheit angenommenen bzw. ausgegebenen Stroms, aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionskochfeld mit einer Kochplatte und einem Satz von Heizmodulen sowie zwei auf der Kochplatte angeordnete Kochgeschirre und
- Fig. 2: eine interne Schaltung des Induktionskochfelds aus Figur 1 mit einer Frequenzbearbeitungseinheit.

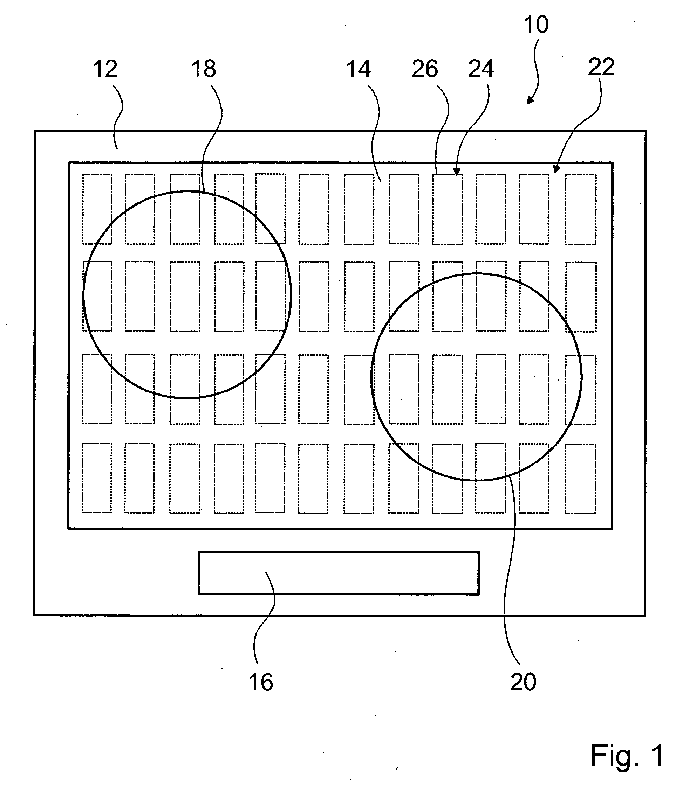

Figur 1 zeigt eine als Induktionskochfeld ausgebildete Heizvorrichtung 10. Die Heizvorrichtung 10 weist einen Befestigungsrahmen 12 zur Befestigung an einer Arbeitsplatte, eine Kochplatte 14 zum Auflegen von Kochgeschirren und ein Bedienungsfeld 16 zum Starten, Stoppen und Einstellen eines Heizbetriebs auf. Auf der Kochplatte 14 sind zwei als Topf ausgebildete Gegenstände 18, 20 angeordnet, die jeweils durch eine durchgezogene Kreislinie schematisch dargestellt sind. Zur Durchführung eines Kochbetriebs der Heizvorrichtung 10 ist diese mit einer Heizeinheit 22 versehen. Die Heizeinheit 22 weist einen Satz von Heizmodulen 24 auf, die jeweils einen als Induktionsspule ausgebildeten Heizkörper 26 umfassen. Die Anordnung der Heizkörper 26, die in der Figur durch ein gestricheltes Rechteck schematisch dargestellt sind, ist als Matrixanordnung ausgelegt. Dabei sind Heizkörper 26 unterschiedlicher Spalten und unterschiedlicher Reihen vom Gegenstand 18 gedeckt.

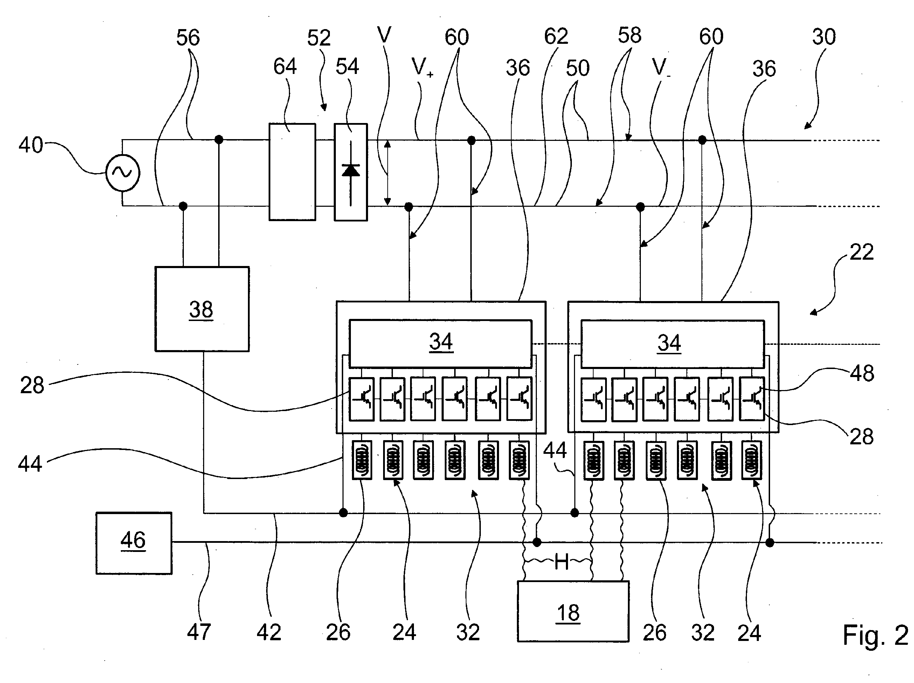

In einem Betrieb eines Heizmoduls 24 wird vom entsprechenden Heizkörper 26 ein als magnetisches Wechselfeld ausgebildetes Heizsignal H erzeugt (siehe Figur 2), welches eine Heizfrequenz, die z.B. 25 kHz beträgt, aufweist. Das Heizsignal H induziert elektrische Ströme im metallischen Boden der Gegenstände 18, 20. Diese elektrischen Ströme erwärmen durch ohmsche Verluste eine sich in den Gegenständen 18, 20 befindende Speise. Ein Heizkörper 26 im Betrieb des entsprechenden Heizmoduls 24 wird zur Erzeugung des Heizsignals H mit einem elektrischen Wechselstrom gespeist, welcher mit der Heizfrequenz oszilliert. Zur Erzeugung dieses Wechselstroms sind die Heizmodule 24 jeweils mit einer als Wechselrichter ausgebildeten Heizfrequenzeinheit 28 versehen. Diese Heizfrequenzeinheiten 28 sind in Figur 2 dargestellt.

Die Heizvorrichtung 10 ist zur Erwärmung der Gegenstände 18, 20 mittels eines Gruppenbetriebs der Heizmodule 24 vorgesehen. Hierzu sind die Heizmodule 24 jeweils mit einem nicht näher dargestellten Sensormittel versehen, mittels dessen erkannt werden kann, ob ein Heizmodul von einem der Gegenstände 18, 20 zumindest teilweise bedeckt ist. Mit Hilfe eines nicht näher beschriebenen Gruppierungsprozesses werden Heizgruppen von Heizmodulen 24 gebildet, die jeweils einem der Gegenstände 18, 20 zugeordnet sind. Startet ein Bediener einen Kochbetrieb der Heizvorrichtung 10 mittels des Bedienfelds 16, wird dieser Kochbetrieb mittels der Heizmodule 24 beider Heizgruppen durchgeführt, während die weiteren Heizmodule 24, die zu keinem der gebildeten Heizgruppen gehören, unbetrieben verbleiben. Verstellt der Bediener einen der Gegenstände 18, 20 auf der Kochplatte 14 oder stellt er ein weiteres Kochgeschirr auf die Kochplatte 14 auf, werden anhand der neuen Anordnung von zu heizenden Gegenständen relativ zu den Heizkörpern 26 entsprechende Heizgruppen von Heizmodulen 24 angepasst bzw. neu gebildet.

In Figur 2 ist eine Heizvorrichtungsschaltung 30 der Heizvorrichtung 10 aus Figur 1 schematisch dargestellt. Die Heizvorrichtungsschaltung 30 umfasst die Heizeinheit 22. Diese weist den Satz von Heizkörpern 26 auf, die jeweils als Induktionsspule ausgebildet und ebenfalls in Figur 1 zu sehen sind. Die Heizeinheit 22 umfasst ferner, wie oben beschrieben, einen Satz von Heizfrequenzeinheiten 28, welcher dem Satz von Heizkörpern 26 zugeordnet ist, wobei eine Heizfrequenzeinheit 28 und ein Heizkörper 26 jeweils ein Heizmodul 24 bilden.

Der Satz von Heizmodulen 24 ist auf verschiedene Gruppen 32 verteilt. In diesem Ausführungsbeispiel ist der Satz auf Gruppen 32 von jeweils sechs Heizmodulen 24 verteilt. Jeder Gruppe 32 von Heizmodulen 24 ist eine Steuereinheit 34 zugeordnet, die zur Steuerung der Heizfrequenzeinheiten 28 der Gruppe 32 vorgesehen ist. Die Steuereinheiten 34 weisen z.B. einen Mikroprozessor auf oder können als Mikroprozessor ausgebildet sein. Die Heizfrequenzeinheiten 28 einer Gruppe 32 und die zugehörige Steuereinheit 34 sind jeweils auf einer Leiterplatte 36 montiert. Die Heizeinheit 22 weist somit eine Anzahl von verschiedenen Leiterplatten 36 auf, die der Anzahl der Gruppe 32 von Heizmodulen 24 entspricht. In diesem Ausführungsbeispiel weist die Heizeinheit 22 acht Gruppen 32 auf. Der Übersichtlichkeit halber wurden in der Figur nur zwei Gruppen 32 mit den entsprechenden Leiterplatten 36 dargestellt. Auf die Anordnung von weiteren Gruppen 32 bzw. Leiterplatten 36 weisen die gestrichelt dargestellten Stromleitungen hin. Die Topologie der Heizeinheit 22 kann ferner während deren Betriebs flexibel geändert werden, indem z.B. die Zuordnung der Heizkörper 26 zu den Heizfrequenzeinheiten 28 zur Bildung eines Heizmoduls 24 während eines Betriebs der Heizeinheit 22 angepasst werden kann. Zur Versorgung der Steuereinheiten 34 mit elektrischer Energie ist die Heizvorrichtungsschaltung 30 mit einer Stromversorgungseinheit 38 versehen, die einerseits mit einer Netzstromversorgung 40 und andererseits mit jeder der Leiterplatten 36 verbunden ist. Die Stromversorgungseinheit 38 stellt ein Stromversorgungssignal 42 auf einer Stromschiene bereit, von welcher jeweils eine Stromzufuhr 44 zur Versorgung einer der Steuereinheiten 34 abgezweigt ist.

Zur Steuerung des oben beschriebenen Gruppenbetriebs der Heizmodule 24 ist die Heizvorrichtungsschaltung 30 ferner mit einer Steuereinheit 46 versehen. Die Steuereinheit 46 kann einen Mikroprozessor aufweisen oder sie kann als Mikroprozessor ausgebildet sein. Diese ist über einen Datenbus 47 mit den Steuereinheiten 34 der verschiedenen Gruppen 32 von Heizmodulen 24 verbunden. Die Steuereinheit 46 ist insbesondere dazu ausgelegt, abhängig von der Position der Gegenstände 18, 20 auf der Kochplatte anhand einer Kommunikation mit den Steuereinheiten 34, die Heizgruppen zu bilden und einen Heizvorgang mit den Heizgruppen zu steuern. In einer weiteren Ausführungsvariante kann die Rolle der Steuereinheit 46 zum Steuern eines Gruppenbetriebs durch eine oder mehrere Steuereinheiten 34 der Gruppen 32 von Heizmodulen 24 übernommen werden, wobei der Gruppenbetrieb der Heizmodule 24 mittels einer zumindest teilweisen Selbstorganisation der Steuereinheiten 34 erfolgt. Hierzu können die Steuereinheiten 34 zum Austausch von Informationen miteinander verbunden sein, worauf in der Figur gestrichelte Verbindungslinien zwischen den Steuereinheiten 34 schematisch hinweisen.

Die Heizfrequenzeinheiten 28 sind zur Erzeugung der Heizfrequenz des von dem entsprechenden Heizkörper 26 erzeugten Heizsignals H vorgesehen. Hierzu sind die Heizfrequenzeinheiten 28 jeweils als Wechselrichter ausgebildet. Eine Heizfrequenzeinheit 28 umfasst vorzugsweise zumindest ein Paar von Schaltmitteln 48, die als Halbleiterbauelemente ausgebildet sind. Auf die Schaltmittel 48 der Heizfrequenzeinheiten 28 wird unabhängig von der Topologie der Heizfrequenzeinheit 28 schematisch mit Hilfe eines Transistorsymbols hingewiesen. In diesem Beispiel sind die Schaltmittel 48 als IGBT (Insulated Gate Bipolar Transistor oder Bipolartransistor mit isolierter Gateelektrode) ausgebildet. Eine alternative Ausführung der Schaltmittel 48, wie z.B. als Mosfet (Metal Oxid Semiconductor Field Effect Transistor oder Metall-Oxid-Halbleiter-Feldeffekttransistor), oder weitere, dem Fachmann als sinnvoll erscheinende Schaltmittel sind denkbar. Die Wechselrichter können mit verschiedenen Topologien aufgebaut sein, wie z.B. mit einem Paar von Schaltmitteln 48 in einer Halbbrückentopologie oder mit zwei Paaren von Schaltmitteln 48, welche in einer Vollbrückentopologie angeordnet sind.

Zur Erzeugung eines Wechselstroms, mittels dessen die Heizkörper 26 das als magnetisches Wechselfeld ausgebildete Heizsignal H erzeugen, sind die Heizfrequenzeinheiten 28 mit einem elektrischen Signal 50 gespeist, das eine Gleichspannung V aufweist. Die Heizfrequenzeinheiten 28 erzeugen den Wechselstrom anhand dieses elektrischen Signals 50 mittels Schaltvorgängen der Schaltmittel 48, die von der Steuereinheit 34 der entsprechenden Gruppe 32 gesteuert werden. Dieses Prinzip ist bekannt und wird im Rahmen dieser Beschreibung nicht näher erläutert.

Zur Erzeugung des Signals 50 ist den Heizfrequenzeinheiten 28 eine Frequenzbearbeitungseinheit 52 vorgeschaltet. Die Frequenzbearbeitungseinheit 52 weist einen Gleichrichter 54 auf, der aus einem Netzstromversorgungssignal 56, welches mit einer Frequenz von 50 oder 60 Hz oszilliert, das elektrische Signal 50 mit der Gleichspannung V erzeugt. Der Gleichrichter 54 ist mit Hilfe eines Diodensymbols schematisch dargestellt. Die Spannung V entspricht der gleichgerichteten Netzstromversorgungsspannung, die z.B. 230 V beträgt. Der Gleichrichter 54 ist über eine Stromschiene 58 mit den Leiterplatten 36 verbunden. Von dieser Stromschiene 58 werden jeweils Zufuhrleitungen 60 zum Zuführen des elektrischen Signals 50 zu einer der Leiterplatten 36 bzw. zu den auf dieser Leiterplatte 36 angeordneten Heizfrequenzeinheiten 28 abgezweigt. Die Stromschiene 58 ist mit zwei elektrischen Leitungen V₊ und V₋ versehen, die jeweils einem Ausgang der Frequenzbearbeitungseinheit 52 unterschiedlicher Polung zugeordnet ist. Die elektrische Leitung V₊ ist mit dem positiven Ausgang verbunden, während die elektrische Leitung V. mit dem negativen Ausgang verbunden ist. Der negativ polarisierte Anteil des elektrischen Signals 50, welcher mittels der elektrischen Leitung V₋ geführt ist, dient als Referenzsignal 62 für die Steuereinheiten 34. Dadurch gibt dieses Referenzsignal 62 eine für die Steuereinheiten 34 gemeinsame Referenzspannung vor. Durch die Vorgabe des Referenzsignals 62 durch eine externe, für die Steuereinheiten 34 gemeinsame Einheit, kann auf eine isolierte Verbindung zum Verteilen eines von einer der Steuereinheiten 34 vorgegebenen Referenzsignals auf die anderen Steuereinheiten 34 verzichtet werden. Sind die Steuereinheiten 34 z.B. zu einem Datenaustausch miteinander verbunden, kann ferner auf eine Isolierung dieser Verbindung verzichtet werden. Die Frequenzbearbeitungseinheit 52 weist ferner eine Frequenzfilterungseinheit 64 auf. Diese Frequenzfilterungseinheit 64 ist als EMV-Filter (elektromagnetische Verträglichkeit) ausgebildet. Diese dient dazu, eine Rückkopplung eines durch einen Betrieb der Heizfrequenzeinheiten 28 erzeugten Signals in eine Leitung der Netzstromversorgung 40 zu verhindern.

In dieser Konfiguration kann durch die Zuordnung der Frequenzbearbeitungseinheit 52 zu mehreren Gruppen 32 von Heizmodulen 24 bzw. mehreren Leiterplatten 36 eine besonders einfache Auslegung der Heizvorrichtungsschaltung 30 erreicht werden. Dies kann insbesondere durch die Bereitstellung des elektrischen Signals 50 für die Heizfrequenzeinheiten 28 mittels der für die Heizfrequenzeinheiten 28 gemeinsamen Stromschiene 58 erreicht werden.

In diesem Ausführungsbeispiel sind die Heizfrequenzeinheiten 28 dazu vorgesehen, eine Maximalleistung von 500 W zu leisten. Die Heizeinheit 22 weist dadurch eine theoretische Maximalleistung P_{M} von 24 kW auf, die erreicht werden könnte, wenn alle Heizmodule 24 gleichzeitig mit ihrer Maximalleistung betrieben wären. Da dies in einer realistischen Anwendung der Heizvorrichtung 10 nicht erfolgt, ist es von Vorteil, wenn die Maximalleistung der Frequenzbearbeitungseinheit 52, insbesondere des Gleichrichters 54, kleiner als die Summe der individuellen Leistungen der Heizmodule 24 ausgebildet ist. Beispielsweise beträgt die Maximalleistung der Frequenzbearbeitungseinheit 52 vorzugsweise einen Wert zwischen 10 % und 50 % der Maximalleistung P_{M}. In diesem Beispiel weist die Frequenzbearbeitungseinheit 52 eine Maximalleistung von 3600 W auf. Um eine Beschädigung der Frequenzbearbeitungseinheit 52 bei einem Betrieb über dessen Maximalleistung zu verhindern, ist die Heizvorrichtungsschaltung 30 mit einem Leistungsbegrenzer versehen, die die von der Heizeinheit 22 angenommene Leistung auf die Maximalleistung der Frequenzbearbeitungseinheit 52 begrenzt. In diesem Beispiel ist die Steuereinheit 46 mit einer Software programmiert, die die von der Heizeinheit 22 bezogene Leistung überwacht und dementsprechend begrenzt. Alternativ oder zusätzlich kann die Frequenzbearbeitungseinheit 52 einen Leistungsbegrenzer, wie z.B. in der Form eines Strombegrenzers, aufweisen.

**Bezugszeichen**

| | | | |
|---|---|---|---|
| 10 | Heizvorrichtung | 60 | Zufuhrleitung |
| 12 | Befestigungsrahmen | 62 | Referenzsignal |
| 14 | Kochplatte | 64 | Frequenzfilterungseinheit |
| 16 | Bedienungsfeld | H | Heizsignal |
| 18 | Gegenstand | V | Spannung |
| 20 | Gegenstand | V₊ | Leitung |
| 22 | Heizeinheit | V₋ | Leitung |
| 24 | Heizmodul | | |
| 26 | Heizkörper | | |
| 28 | Heizfrequenzeinheit | | |
| 30 | Heizvorrichtungsschaltung | | |
| 32 | Gruppe | | |
| 34 | Steuereinheit | | |
| 36 | Leiterplatte | | |
| 38 | Stromversorgungseinheit | | |
| 40 | Netzstromversorgung | | |
| 42 | Stromversorgungssignal | | |
| 44 | Stromzufuhr | | |
| 46 | Steuereinheit | | |
| 47 | Datenbus | | |
| 48 | Schaltmittel | | |
| 50 | Signal | | |
| 52 | Frequenzbearbeitungseinheit | | |
| 54 | Gleichrichter | | |
| 56 | Netzstromversorgungssignal | | |
| 58 | Stromschiene | | |

## Patentansprüche

1. Heizvorrichtungsschaltung, insbesondere Induktionskochvorrichtungsschaltung, mit einem Satz von Heizfrequenzeinheiten (28) zur Erzeugung einer Heizfrequenz und mit zumindest einer Frequenzbearbeitungseinheit (52) zum Ändern zumindest einer Frequenz eines Signals (50, 56), die den Heizfrequenzeinheiten (28) vorgeschaltet ist, wobei der Frequenzbearbeitungseinheit (52) zumindest drei Heizfrequenzeinheiten (28) zugeordnet sind, **dadurch gekennzeichnet, dass** die Frequenzbearbeitungseinheit (52) eine Maximalleistung aufweist, die kleiner als die Leistung des Satzes von Heizfrequenzeinheiten (28) ausgebildet ist.

2. Heizvorrichtungsschaltung nach Anspruch 1, **dadurch gekennzeichnet, dass** die Frequenzbearbeitungseinheit (52) einen Gleichrichter (54) aufweist.

3. Heizvorrichtungsschaltung nach Anspruch 1 oder 2, **dadurch gekennzeichnet, dass** die Frequenzbearbeitungseinheit (52) eine Frequenzfilterungseinheit (64) aufweist.

4. Heizvorrichtungsschaltung nach einem der vorhergehenden Ansprüche, **dadurch gekennzeichnet, dass** eine Heizfrequenzeinheit (28) im Zusammenwirken mit jeweils einem Heizkörper (26) ein Heizmodul (24) zum Erzeugen eines Heizsignals (H) mit der Heizfrequenz bildet.

5. Heizvorrichtungsschaltung nach Anspruch 4, **gekennzeichnet durch** eine Steuereinheit (46), die dazu vorgesehen ist, abhängig von einer Position eines zu heizenden Gegenstands (18, 20) relativ zu den Heizmodulen (24) eine zum Heizen des Gegenstands (18, 20) ausgebildete Heizgruppe von Heizmodulen (24) zu bilden.

6. Heizvorrichtungsschaltung nach einem der vorhergehenden Ansprüche, **gekennzeichnet durch** zumindest zwei Steuereinheiten (34), die jeweils zur Steuerung einer Gruppe (32) von Heizfrequenzeinheiten (28) vorgesehen sind.

7. Heizvorrichtungsschaltung nach Anspruch 6, **dadurch gekennzeichnet, dass** der Frequenzbearbeitungseinheit (52) zumindest zwei Gruppen (32) von Heizfrequenzeinheiten (28) zugeordnet sind.

8. Heizvorrichtungsschaltung nach Anspruch 6 oder 7, **dadurch gekennzeichnet, dass** die Frequenzbearbeitungseinheit (52) im Betrieb ein für die Steuereinheiten gemeinsames Referenzsignal (62) bereitstellt.

9. Heizvorrichtungsschaltung nach einem der Ansprüche 6 bis 8, **gekennzeichnet durch** eine Stromversorgungseinheit (38) zur Versorgung der Steuereinheiten (34), die im Betrieb ein für die Steuereinheiten (34) gemeinsames Stromversorgungssignal (42) bereitstellt.

10. Heizvorrichtungsschaltung nach einem der Ansprüche 6 bis 9, **gekennzeichnet durch** einen Satz von Leiterplatten (36), auf welchen jeweils eine Gruppe (32) von Heizfrequenzeinheiten (28) angeordnet ist.

11. Heizvorrichtungsschaltung nach Anspruch 10, **dadurch gekennzeichnet, dass** der Frequenzbearbeitungseinheit (52) zumindest zwei Leiterplatten (36) zugeordnet sind.

12. Heizvorrichtung, insbesondere Induktionskochvorrichtung, mit einer Heizvorrichtungsschaltung (30) nach einem der vorhergehenden Ansprüche.

## Claims

1. Heating device circuit, in particular an induction cooking device circuit, with a set of heating frequency units (28) for generating a heating frequency and with at least one frequency processing unit (52) for modifying at least one frequency of a signal (50, 56), which is connected upstream of the heating frequency units (28), wherein at least three heating frequency units (28) are assigned to the frequency processing unit (52), **characterised in that** the frequency processing unit (52) has a maximum power, which is configured to be lower than the power of the set of heating frequency units (28).

2. Heating device circuit according to claim 1, **characterised in that** the frequency processing unit (52) has a rectifier (54).

3. Heating device circuit according to claim 1 or 2, **characterised in that** the frequency processing unit (52) has a frequency filtering unit (64).

4. Heating device circuit according to one of the preceding claims, **characterised in that** a heating frequency unit (28) works with one heating element (26) respectively to form a heating module (24) for generating a heating signal (H) with the heating frequency.

5. Heating device circuit according to claim 4, **characterised by** a control unit (46) provided to form a heating group of heating modules (24) for heating an object (18, 20) to be heated as a function of the position of said object (18, 20) relative to the heating modules (24).

6. Heating device circuit according to one of the preceding claims, **characterised by** at least two control units (34) provided respectively to control a group (32) of heating frequency units (28).

7. Heating device circuit according to claim 6, **characterised in that** at least two groups (32) of heating frequency units (28) are assigned to the frequency processing unit (52).

8. Heating device circuit according to claim 6 or 7, **characterised in that** the frequency processing unit (52) provides a common reference signal (62) for the control units during operation.

9. Heating device circuit according to one of claims 6 to 8, **characterised by** a power supply unit (38) for supplying the control units (34), which supplies a common power supply signal (42) for the control units (34) during operation.

10. Heating device circuit according to one of claims 6 to 9, **characterised by** a set of printed circuit boards (36), on which a group (32) of heating frequency units (28) is respectively disposed.

11. Heating device circuit according to claim 10, **characterised in that** at least two printed circuit boards (36) are assigned to the frequency processing unit (52).

12. Heating device, in particular an induction cooking device, with a heating device circuit (30) according to one of the preceding claims.

## Revendications

1. Circuit de dispositif chauffant, notamment circuit de dispositif de cuisson à induction, comprenant un jeu d'unités de fréquence de chauffage (28) destinées à générer une fréquence de chauffage et comprenant au moins une unité de traitement de fréquence (52) destinée à modifier au moins une fréquence d'un signal (50, 56), laquelle unité de traitement de fréquence est couplée en amont des unités de fréquence de chauffage (28), au moins trois unités de fréquence de chauffage (28) étant attribuées à l'unité de traitement de fréquence (52), **caractérisé en ce que** l'unité de traitement de fréquence (52) présente une puissance maximale qui est réalisée de manière plus petite que la puissance du jeu d'unités de fréquence de chauffage (28).

2. Circuit de dispositif chauffant selon la revendication 1, **caractérisé en ce que** l'unité de traitement de fréquence (52) présente un redresseur (54).

3. Circuit de dispositif chauffant selon la revendication 1 ou 2, **caractérisé en ce que** l'unité de traitement de fréquence (52) présente une unité de filtrage de fréquence (64).

4. Circuit de dispositif chauffant selon l'une quelconque des revendications précédentes, **caractérisé en ce qu'**une unité de fréquence de chauffage (28), en agissant avec respectivement un élément de chauffage (26), forme un module de chauffage (24) destiné à générer un signal de chauffage (H) à l'aide de la fréquence de chauffage.

5. Circuit de dispositif chauffant selon la revendication 4, **caractérisé par** une unité de commande (46) qui est ménagée pour former, en fonction d'une position d'un objet à chauffer (18, 20) par rapport aux modules de chauffage (24), un groupe chauffant de modules de chauffage (24), réalisé pour chauffer l'objet (18, 20).

6. Circuit de dispositif chauffant selon l'une quelconque des revendications précédentes, **caractérisé par** au moins deux unités de commande (34) qui sont respectivement ménagées pour la commande d'un groupe (32) d'unités de fréquence de chauffage (28).

7. Circuit de dispositif chauffant selon la revendication 6, **caractérisé en ce qu'**au moins deux groupes (32) d'unités de fréquence de chauffage (28) sont attribués à l'unité de traitement de fréquence (52).

8. Circuit de dispositif chauffant selon la revendication 6 ou 7, **caractérisé en ce que** l'unité de traitement de fréquence (52), en fonctionnement, fournit un signal de référence (62) commun pour les unités de commande.

9. Circuit de dispositif chauffant selon l'une quelconque des revendications 6 à 8, **caractérisé par** une unité d'alimentation en courant (38) destinée à alimenter les unités de commande (34), laquelle, en fonctionnement, fournit un signal d'alimentation en courant (42) commun pour les unités de commande (34).

10. Circuit de dispositif chauffant selon l'une quelconque des revendications 6 à 9, **caractérisé par** un jeu de plaquettes à circuit imprimé (36) sur lesquelles est respectivement disposé un groupe (32) d'unités de fréquence de chauffage (28).

11. Circuit de dispositif chauffant selon la revendication 10, **caractérisé en ce qu'**au moins deux plaquettes à circuit imprimé (36) sont attribuées à l'unité de traitement de fréquence (52).

12. Dispositif chauffant, notamment dispositif de cuisson à induction, comprenant un circuit de dispositif chauffant (30) selon l'une quelconque des revendications précédentes.
